# FASCICULE DE BREVET EUROPEEN

(11) **EP 4 142 244 B1**
(45) Date de publication et mention de la délivrance du brevet: **06.03.2024**
(21) Numéro de dépôt: 22191184.5
(22) Date de dépôt: 19.08.2022
(51) Int. Cl.: H04L 45/00

(54) **PROCÉDÉ DE RÉGULATION DESTINÉ À RÉSORBER UN ENGORGEMENT D'UN RÉSEAU MAILLÉ DE COMMUNICATION PAR COURANTS PORTEURS EN LIGNE ET RADIO**
REGULIERUNGSVERFAHREN ZUR BEHEBUNG EINER ÜBERLASTUNG IN EINEM MASCHENKOMMUNIKATIONSNETZ ÜBER LEITUNGSGEBUNDENE UND FUNKÜBERTRAGENE TRÄGERSTRÖME
CONTROL METHOD FOR REDUCING A BLOCKAGE IN A MESH COMMUNICATION NETWORK BY POWERLINE AND RADIO COMMUNICATION

(30) Priorité: 26.08.2021 FR 2108919
(43) Date de publication de la demande: 01.03.2023
(73) Titulaire: Sagemcom Energy & Telecom SAS, 92500 Rueil-Malmaison (FR)
(72) Inventeur: BAROIS, Jérôme, 92500 Rueil Malmaison (FR); TERRIEN, Clément, 92500 Rueil Malmaison (FR)
(74) Mandataire: Cabinet Le Guen Maillet

(56) Documents cités:
- EP-A1- 2 337 283
- US-A1- 2013 250 754

## Description

### DOMAINE TECHNIQUE

La présente invention concerne le domaine des réseaux maillés de communication par courants porteurs en ligne et plus précisément un procédé de régulation destiné à résorber un engorgement d'un réseau de communication maillé.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un dispositif noeud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs noeuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment.

Dans une évolution de la norme G3-PLC définie dans une Annexe H de la recommandation ITU-T G.9903 (2017) Amendement 1 (05/2021), appelée G3-PLC Hybrid PLC & RF, un canal radio RF (acronyme de radio-fréquence) peut être utilisé à la place d'une desdites bandes fréquentielles PLC. Plus précisément, cette version de la norme permet l'utilisation occasionnelle d'une couche physique radio secondaire basée sur une modulation SUN FSK telle que définie dans le standard IEEE 802.15.4:2015. Ainsi, en utilisant les différents media G3-PLC et RF pour transmettre des données, le réseau d'alimentation électrique maximise sa couverture et sa résilience. Un noeud réseau d'alimentation électrique capable d'émettre et de recevoir des données en utilisant les deux média (PLC et RF) est appelé noeud hybride.

Les réseaux tels que susmentionnés sont des réseaux de communication maillés qui comportent plusieurs dispositifs noeuds formant une structure maillée, un dispositif noeud source transmet des messages à un dispositif noeud destination par l'intermédiaire de dispositifs noeuds jouant un rôle de relai. Ainsi, un message émis par le dispositif noeud source vers le noeud dispositif destination passe par une route formée par les dispositifs noeuds jouant un rôle de relai jusqu'au dispositif noeud destination.

Dans un réseau de communication maillé par courants porteurs en ligne PLC s'appuyant sur un protocole de routage de type réactif, tel que le protocole LOADng (« Lightweight On-demand Ad hoc Distance-vector Routing Protocol - Next Génération » en anglais), un dispositif noeud source découvre une route vers un noeud destination donné en diffusant une requête de découverte de route à travers le réseau de communication maillé. Un message diffusé par un dispositif noeud n'étant en général pas visible en tout point dudit réseau de communication maillé, le dispositif noeud source diffuse la requête de découverte de route à chacun de ses dispositifs noeuds voisins, autrement dit à chaque dispositif noeud se trouvant à la portée du dispositif noeud source dans le réseau de communication maillé. Lesdits dispositifs noeuds voisins transmettent alors à leur tour la requête de découverte de route à leurs dispositifs noeuds voisins respectifs. Dans le cas où un dispositif noeud est directement voisin du dispositif noeud destination, il transmet la requête de découverte de route uniquement vers ledit dispositif noeud destination. Plusieurs requêtes de découverte de route sont ainsi diffusées de proche en proche à travers différents chemins dans le réseau de communication maillé jusqu'à atteindre le dispositif noeud destination. Le dispositif noeud destination sélectionne alors une route optimale parmi les différents chemins en fonction d'informations de coût associées à chaque requête de découverte de route reçue et transmet, via ladite route optimale, une réponse de découverte de route au dispositif noeud source permettant d'activer la route.

Lorsqu'une route entre un dispositif noeud source et un dispositif noeud destination est rompue, le dispositif noeud source tente de réparer la route en diffusant une requête de réparation de route à travers le réseau de communication maillé. Or, lorsque le réseau de communication maillé est perturbé ou que plusieurs routes doivent être réparées simultanément, un tel mécanisme de réparation de routes génère une transmission de nombreuses requêtes de réparation de route dans le réseau de communication maillé et entraîne un engorgement du réseau de communication maillé. D'autres routes peuvent alors être rompues à leur tour, générant la diffusion de nouvelles requêtes de réparation de route et entraînant l'augmentation de l'engorgement du réseau de communication maillé. Par répercussion, le réseau de communication maillé peut alors subir un engorgement pouvant durer jusqu'à plusieurs jours et empêchant la transmission d'autres données que des messages de requêtes de découverte ou de réparation de route.

Il est alors souhaitable de pallier ces inconvénients de l'état de la technique.

Il est notamment souhaitable de fournir une solution qui permette de résorber rapidement un engorgement du réseau de communication maillé lorsque des routes sont rompues. Il est de plus souhaitable de fournir une solution permettant de privilégier la réparation de routes optimales dans le réseau de communication maillé dans un contexte d engorgement. Un exemple de procédé pour résorber des engorgements dans un réseau maillé est décrit dans le document US2013250754.

### EXPOSE DE L'INVENTION

A cette fin, selon un premier aspect, l'invention propose un procédé de régulation destiné à résorber un engorgement d'un réseau de communication maillé, le réseau de communication maillé comportant une pluralité de dispositifs noeuds utilisant des communications par courants porteurs en ligne, une requête de route étant émise par un dispositif noeud source et des copies de la requête de route étant relayées par diffusion de proche en proche par des dispositifs noeuds intermédiaires vers un dispositif noeud destination, un dispositif noeud intermédiaire pouvant recevoir une ou plusieurs copies d'au moins une requête de route, caractérisé en ce que le dispositif noeud intermédiaire est apte à émettre des messages sur au moins une bande fréquentielle du réseau d'alimentation électrique utilisant des communications par courants porteurs en ligne et sur un canal radio et le procédé est exécuté par le dispositif noeud intermédiaire et comporte les étapes de :
- détection d'une situation d'engorgement lorsqu'un nombre de copies de requêtes de route reçues sur une fenêtre temporelle de durée prédéfinie est supérieur à un premier seuil prédéfini,
- identification, lorsqu'une situation d'engorgement est détectée, des requêtes de route comme importantes, une requête de route étant identifiée comme importante lorsque le nombre de copies de ladite requête de route reçues sur la fenêtre temporelle de durée prédéfinie est supérieur à un deuxième seuil prédéfini ou supérieur au nombre de copies d'autres requêtes de route,
- relai uniquement des copies des requêtes de route identifiées comme importantes sur une bande fréquentielle et sur le canal radio,
- relai des copies des requêtes de route identifiées comme non importantes sur une bande fréquentielle ou sur le canal radio.

L'invention concerne aussi un dispositif de régulation destiné à résorber un engorgement d'un réseau de communication maillé, le réseau de communication maillé comportant une pluralité de dispositifs noeuds utilisant des communications par courants porteurs en ligne, une requête de route étant émise par un dispositif noeud source et des copies de la requête de route étant relayées par diffusion de proche en proche par des dispositifs noeuds intermédiaires vers un dispositif noeud destination, un dispositif noeud intermédiaire pouvant recevoir une ou plusieurs copies d'au moins une requête de route, caractérisé en ce que le dispositif noeud intermédiaire est apte à émettre des messages sur au moins une bande fréquentielle du réseau d'alimentation électrique utilisant des communications par courants porteurs en ligne et sur un canal radio et le dispositif de régulation est compris dans le dispositif noeud intermédiaire et comporte :
- des moyens de détection d'une situation d'engorgement lorsqu'un nombre de copies de requêtes de route reçues sur une fenêtre temporelle de durée prédéfinie est supérieur à un premier seuil prédéfini,
- des moyens d'identification, lorsqu'une situation d'engorgement est détectée, des requêtes de route comme importantes, une requête de route étant identifiée comme importante lorsque le nombre de copies de ladite requête de route reçues sur la fenêtre temporelle de durée prédéfinie est supérieur à un deuxième seuil prédéfini ou supérieur au nombre de copies d'autres requêtes de route,

- des moyens de relai uniquement des copies des requêtes de route identifiées comme importantes sur une bande fréquentielle et sur le canal radio,
- des moyens de relai des copies des requêtes de route identifiées comme non importantes sur une bande fréquentielle ou sur le canal radio.

Selon un mode particulier de l'invention, le procédé comporte en outre l'étape de relai des copies des requêtes de route identifiées comme non importantes sur une bande fréquentielle et sur le canal radio lorsqu'un nombre de copies de requêtes de route reçues sur une fenêtre temporelle de durée prédéfinie est inférieur à un troisième seuil prédéfini. Selon un mode particulier de l'invention, le relai des copies des requêtes de route identifiées comme importantes est effectué en relayant en priorité les requêtes de routes dont le nombre de copies reçues par le dispositif noeud intermédiaire est le plus élevé. Selon un mode particulier de l'invention, les copies des requêtes de route relayées lorsque le nombre de copies de requêtes de route reçues sur la fenêtre temporelle de durée prédéfinie est supérieur au premier seuil prédéfini comportent une information prédéterminée qui indique que le nombre de copies de requêtes de route reçues sur une fenêtre temporelle de durée prédéfinie est supérieur au premier seuil prédéfini.

Selon un mode particulier de l'invention, chaque dispositif noeud recevant une réponse de découverte de route à une requête relayée comportant l'information prédéterminée insère avec la route correspondante mémorisée dans sa table de routage, une durée de validité de la route inférieure à la durée de validité de la route lorsque l'information prédéterminée n'est pas présente dans la réponse de découverte reçue.

La présente invention concerne aussi un produit programme d'ordinateur. Il comprend des instructions pour implémenter, par un dispositif noeud, le procédé selon l'un des modes de réalisation précédents, lorsque ledit programme est exécuté par un processeur du dispositif noeud.

La présente invention concerne aussi un support de stockage. Il stocke un programme d'ordinateur comprenant des instructions pour implémenter, par un dispositif noeud, le procédé selon l'un des modes de réalisation précédents, lorsque ledit programme est exécuté par un processeur du dispositif noeud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un réseau de communication selon un mode de réalisation ;
[Fig. 2] illustre schématiquement les différentes couches d'un modèle OSI dans le cas particulier de la norme G3-PLC Hybrid PLC & RF ;
[Fig. 3] illustre schématiquement un procédé de régulation destiné à résorber un engorgement du réseau de communication maillé utilisant au moins une bande fréquentielle et un canal radio selon la présente invention ;
[Fig. 4] illustre schématiquement un procédé d'enrichissement d'une table de routage utilisée dans un réseau de communication maillé utilisant au moins une bande fréquentielle et un canal radio selon la présente invention ;
[Fig. 5] illustre schématiquement un exemple d'architecture matérielle d'un dispositif noeud du réseau de communication selon un mode de réalisation.

### EXPOSE DETAILLE DE MODES DE REALISATION

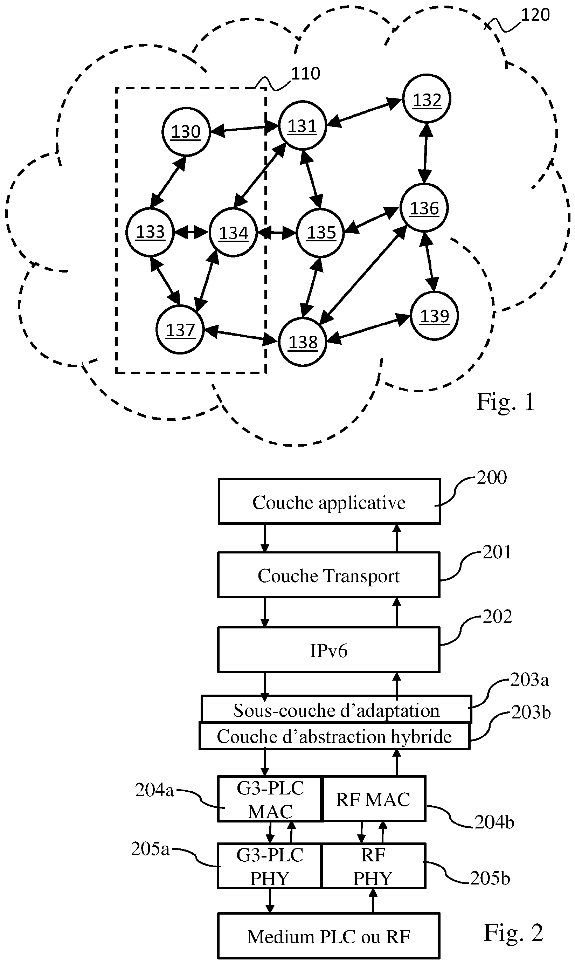

La **Fig. 1** illustre schématiquement un réseau de communication maillé 120. Le réseau de communication maillé 120 est par exemple un réseau d'alimentation électrique de type AMM. Le réseau de communication maillé 120 s'appuie sur des communications par courants porteurs en ligne PLC ou par radio-fréquences RF pour permettre à un dispositif noeud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs noeuds du réseau de communication maillé 120. Le réseau de communication maillé 120 peut comporter d'autres dispositifs noeuds, par exemple installés au niveau de transformateurs électriques. Le réseau de communication 120 a donc une structure maillée, telle que représentée schématiquement sur la Fig. 1 à l'aide des flèches, où des dispositifs noeuds jouent le rôle de relais pour augmenter la portée des communications dans le réseau de communication maillé 120, comme détaillé ci-après. Ainsi, un même compteur électrique intelligent dispose potentiellement de plusieurs chemins pour atteindre le concentrateur de données, et vice versa. Dans la suite du document, les termes « compteur électrique intelligent » et « compteur » sont utilisés de manière interchangeable.

La présente invention est ainsi particulièrement adaptée au contexte de la technologie G3-PLC Hybrid PLC & RF telle que définie dans la recommandation ITU-T G.9903 (2017) Amendement 1 (05/2021) et plus particulièrement dans l'Annexe H.

Le réseau de communication maillé 120 comporte ainsi une pluralité de dispositifs noeuds 130, 131, 132, 133, 134, 135, 136, 137, 138, 139. A chaque dispositif noeud du réseau de communication maillé 120 est associé un voisinage réseau. Sur la Fig. 1, le dispositif noeud 133 est associé à un voisinage réseau 110 englobant les dispositifs noeuds 130, 134 et 137. En effet, dans le réseau de communication maillé 120, un signal ou un message diffusé par un dispositif noeud (tel que le dispositif noeud 133) n'est en général pas visible en tout point dudit réseau de communication. Chaque dispositif noeud émetteur de signaux ou de messages dispose alors d'un voisinage réseau, c'est-à-dire d'un sous-ensemble dudit réseau de communication maillé 120 dans lequel tout dispositif noeud peut recevoir de manière intelligible lesdits signaux ou messages directement en provenance du dispositif noeud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif noeud à la source desdits signaux et aussi potentiellement en fonction de caractéristiques du canal de communication (atténuation, bruit, impédance...).

Le réseau de communication maillé 120 s'appuie sur un protocole de routage de type réactif, tel que le protocole LOADng (« Lightweight On-demand Ad hoc Distance-vector Routing Protocol - Next Génération » en anglais). Contrairement aux protocoles de routage de type proactif qui s'appuient sur une connaissance globale de topologie réseau, les protocoles de routage de type réactif s'appuient sur des découvertes de routes à la demande, chaque dispositif noeud du réseau ayant alors besoin uniquement d'avoir connaissance de son propre voisinage réseau pour router des données dans le réseau de communication maillé 120.

Pour découvrir une route appropriée dans le réseau de communication maillé 120 depuis un dispositif noeud source (par exemple le dispositif noeud 133) jusqu'à un dispositif noeud destination (par exemple le dispositif noeud 132), il est connu que le dispositif noeud source diffuse (« broadcast » en anglais) une requête de découverte de route, appelée RREQ (« Route REQuest » en anglais). Cette requête de découverte de route est reçue par chaque dispositif noeud dans le voisinage réseau dudit dispositif noeud source. Chaque dispositif noeud dans le voisinage réseau dudit dispositif noeud source relaie, par diffusion, ladite requête si ledit dispositif noeud en question n'est pas le dispositif noeud destination. Par diffusion de proche en proche, plusieurs requêtes de découverte de route sont typiquement reçues par le dispositif noeud destination, chacune de ces requêtes ayant suivi un chemin différent dans le réseau de communication maillé 120.

Chaque dispositif noeud qui est à l'origine d'un message, comme par exemple une requête de découverte de route, y inclut un identifiant qui lui est propre, ainsi qu'un numéro de séquence, tel que défini dans le protocole LOADng. Ce numéro de séquence est une valeur de compteur propre à chaque dispositif noeud du réseau de communication maillé 120. A chaque fois qu'un dispositif noeud génère un nouveau message, ledit dispositif noeud incrémente son compteur et inclut dans le message en question la valeur dudit compteur. Ainsi, lorsqu'un dispositif noeud reçoit un message, ledit dispositif noeud analyse l'identifiant du dispositif noeud à l'origine du message et le numéro de séquence inclus dans le message, et peut déterminer si le message reçu est effectivement un nouveau message ou une nouvelle copie d'un message déjà reçu.

Chaque dispositif noeud peut toutefois décider de ne pas relayer une requête de découverte de route, lorsqu'un ou plusieurs critères ne sont pas remplis. Notamment, avant de décider de relayer ladite requête, le dispositif noeud en question vérifie typiquement si ladite requête comporte une information représentative d'un coût de route, depuis le dispositif noeud source jusqu'au dispositif noeud en question, qui est meilleur que le coût de route représenté par une information contenue dans une autre requête de découverte de route précédemment reçue par le dispositif noeud en question. En d'autres termes, le dispositif noeud en question relaie, par diffusion, ladite requête si ladite requête concerne un chemin qui a suivi, depuis le dispositif noeud source jusqu'au dispositif noeud en question, un trajet de plus faible coût que toute autre requête précédemment reçue par le dispositif noeud en question (donc pour la même découverte de route).

Le coût d'une route peut s'appuyer sur une ou plusieurs métriques. Par exemple, le coût de route est un nombre de sauts (« hops » en anglais) subis par la requête en question depuis le dispositif noeud source. Selon un autre exemple, le coût de route est le résultat d'un calcul qui dépend de la bande passante des liens franchis, par la requête en question depuis le dispositif noeud source et/ou de la qualité des liens de communication. Selon encore un autre exemple, le coût de route est proportionnel à la latence subie par la requête en question depuis le dispositif noeud source. D'autres métriques peuvent être utilisées pour établir un coût de route, c'est-à-dire un coût de transit, depuis le dispositif noeud source jusqu'au dispositif noeud destination. Selon encore un autre exemple, le coût de route dépend également du media, i.e. radio ou CPL, utilisé pour transmettre les données entre deux noeuds successifs.

Lorsqu'un dispositif noeud décide de relayer, par diffusion, une requête de découverte de route, le dispositif noeud en question met à jour l'information de coût de route contenue dans ladite requête, de manière à prendre en compte que ladite requête est passée par le dispositif noeud en question. Ainsi, selon un tel principe, plusieurs requêtes de découverte de route parviennent typiquement au dispositif noeud destination, chacune comportant une information de coût de route que ladite requête a suivie pour être propagée depuis le dispositif noeud source jusqu'au dispositif noeud destination. Le trajet emprunté par ladite requête de découverte de route associée au meilleur coût de route est ensuite sélectionné pour permettre au dispositif noeud source de transmettre des données au dispositif noeud destination. Pour activer la route en question, le dispositif noeud destination transmet une réponse de découverte de route, appelée RREP (« Route REPly » en anglais). Cette réponse de découverte de route est transmise de proche en proche en suivant le chemin inverse de la requête de découverte de route qui était associée au meilleur coût de route. Chaque dispositif noeud recevant la réponse de découverte de route met à jour une table de routage interne, au niveau de la couche liaison de données DLL, afin d'y indiquer que tout message ultérieur transmis en mode point-à-point (« unicast » en anglais) depuis le dispositif noeud source en question vers le dispositif noeud destination en question doit être transmis ou relayé vers tel ou tel dispositif noeud de son voisinage réseau. Au sein de la couche liaison, les tables de routage sont préférentiellement implémentées dans une sous-couche d'adaptation en charge de la mise en oeuvre du protocole de routage dans le réseau de communication. Par exemple, cette sous-couche d'adaptation est conforme au protocole 6LoWPAN (pour « IPv6 over Low power Wireless Personal Area Networks » en anglais), qui a été initialement développé pour supporter IPv6 dans le cadre de la norme IEEE 802.15.4. A noter que le protocole 6LoWPAN s'appuie lui-même sur le protocole de routage de type réactif LOADng susmentionné. Une couche d'abstraction hybride (« Hybrid abstraction layer » en anglais) fournit des services appropriés à la sous-couche d'adaptation en vue d'envoyer/recevoir des données vers/de la sous-couche MAC adéquate (« Medium Access Control » en anglais), i.e. RF ou PLC.

Grâce aux tables de routage ainsi configurées, des communications point-à-point (« unicast » en anglais) peuvent être effectuées par toute paire de dispositifs noeuds du réseau de communication maillé 120. Des dispositifs noeuds intermédiaires servent donc de relais lorsque les dispositifs noeuds de ladite paire ne sont pas dans le voisinage réseau l'un de l'autre, les communications s'opèrent ainsi de proche en proche, chaque dispositif noeud s'appuyant sur un de ses propres voisins pour faire suivre des messages jusqu'à leurs destinataires respectifs.

Une route entre un dispositif noeud source et un dispositif noeud destination peut être rompue, en raison par exemple de difficultés de routage liées à une perturbation du réseau de communication maillé 120. Un mécanisme de réparation de route est alors initialisé et implique que le dispositif noeud source en question diffuse une nouvelle requête de route, plus précisément une requête de réparation de route comportant un nouveau numéro de séquence. La requête de route étant relayée par diffusion de proche en proche aux dispositifs noeuds du réseau de communication maillé 120, un tel mécanisme de réparation de route augmente le risque de survenue d'une situation d'engorgement du réseau de communication maillé 120.

Afin d'éviter une telle situation d'engorgement et selon la présente invention, chaque dispositif noeud peut détecter un début d'engorgement en comparant un débit de requêtes de route (i.e., le nombre de requêtes de route sur une fenêtre temporelle de durée prédéfinie) reçues à un premier seuil prédéfini, appelé seuil de saturation. Tant que le débit reste inférieur au seuil de saturation, le dispositif noeud reste dans un premier mode, dit mode nominal, dans lequel une requête de route reçue est relayée systématiquement sur au moins une bande fréquentielle et sur le canal radio par diffusion dans le voisinage réseau dudit dispositif noeud. Lorsque le débit atteint ou dépasse le seuil de saturation, le dispositif noeud passe dans un deuxième mode, dit mode dégradé. Dans le mode dégradé, le dispositif noeud relaie seulement les requêtes de route considérées comme provenant d'un noeud important, sur au moins une bande fréquentielle et sur le canal radio, pour les autres noeuds considérés comme non importants, le dispositif noeud relaie les requêtes de route reçues soit sur une bande fréquentielle soit sur le canal radio en fonction de l'engorgement de la bande fréquentielle et du canal radio.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais) pour la au moins une bande fréquentielle ou SUN-FSK (Smart Utility Network - Frequency Shift Keying en anglais) pour le canal radio RF.

En termes de bandes fréquentielles utilisables dans le cadre de la mise en oeuvre du réseau de communication maillé 120, on peut citer : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; la bande fréquentielle CENELEC B, qui va approximativement de 98 kHz à 122 kHz et le canal radio RF qui va approximativement de 863 MHz à 870 MHz. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; un quatrième schéma de modulation à seize porteuses dans la bande fréquentielle CENELEC B et un cinquième schéma de modulation de type SUN-FSK pour le canal radio RF de G3-PLC Hybrid PLC & RF. La modulation SUN-FSK est définie dans la section 20 du document IEEE 802.15.4 :2015.

La **Fig. 2** illustre schématiquement les différentes couches d'un modèle OSI dans le cas particulier de la norme G3-PLC Hybrid PLC & RF telle que définie dans l'annexe H de la recommandation ITU-T G.9903 (2017) Amendement 1 (05/2021).

Un message à transmettre provenant d'une couche applicative 200 est transmis à une couche transport 201. La couche transport 201 regroupe l'ensemble des protocoles chargés de la gestion des erreurs et du contrôle des flux réseaux. Les deux principaux protocoles utilisés sont les protocoles TCP et UDP. La couche transport 201 crée des paquets en ajoutant des entêtes aux données en provenance de la couche applicative 200. Les paquets sont ensuite transmis à la couche IP, e.g. IPv6 202. La couche IP 202 encapsule les paquets en provenance de la couche transport 201 en ajoutant notamment un entête IPv6. Un paquet IPv6 peut faire jusqu'à 1400 octets. Dans le cas où le paquet est de taille supérieure à une valeur de seuil, ce paquet est fragmenté en au moins deux fragments afin de l'adapter aux contraintes de la couche MAC (acronyme anglais de « Media Access Control »), notamment à la taille des trames MAC.

A cet effet, la norme G3-PLC Hybrid PLC & RF incorpore le protocole 6LoWPAN lequel permet d'adapter des paquets de données IPv6 aux contraintes des couches MAC, notamment en les fragmentant. En effet, les trames MAC utilisées sont de tailles bien inférieures (400 octets maximum disponibles par paquet pour la partie IP) aux paquets IPv6 de 1 400 octets.

Les paquets IPv6 sont transmis à une sous-couche adaptation 203a qui incorpore le protocole 6LoWPAN qui le cas échéant les fragmente. Bien entendu, dans le cas d'un paquet IPv6 suffisamment petit pour être contenu dans une seule trame MAC G3-PLC ou MAC RF, aucune fragmentation n'est effectuée.

Une couche d'abstraction hybride 203b transfère ensuite le fragment ou le paquet IP en cas d'absence de fragmentation à la sous-couche MAC appropriée 204a ou 204b, en fonction du médium choisi pour sa transmission.

Dans la suite le terme fragment est utilisé pour désigner à la fois un fragment obtenu à partir d'un paquet IP fragmenté ou bien le paquet IP lui-même en cas d'absence de fragmentation.

La transmission d'un fragment sur le médium PLC, i.e. sur la ligne de courant, comprend classiquement différentes étapes notamment une segmentation des fragments afin de les adapter à la couche physique G3-PLC PHY 205a et une modulation OFDM du signal. La segmentation consiste à partitionner une trame MAC en PSDUs (acronyme anglais de « PHY Service Data Unit »). Tous les PSDU issus d'un même fragment sont modulés en utilisant un même schéma de modulation.

La transmission d'un fragment sur le canal radio RF comprend différentes étapes notamment une segmentation des fragments afin de les adapter à la couche physique radio RF PHY 205b et une modulation SUN-FSK du signal. Comme dans le cas PLC, la segmentation consiste à partitionner une trame MAC (acronyme anglais de « Media Access Control ») en PSDUs (acronyme anglais de « PHY Service Data Unit »). Tous les PSDU issus d'un même fragment sont modulés en utilisant un même schéma de modulation. La spécification de la couche physique radio RF PHY 205b est donnée dans les sections 10, 11 et 20 de la norme IEEE 802.15.4-2015 telle que modifiée par le document IEEE 802.15.4v :2017 et complétée par la Table H-5-1 de la recommandation ITU-T G.9903 (2017) Amendement 1 (05/2021).

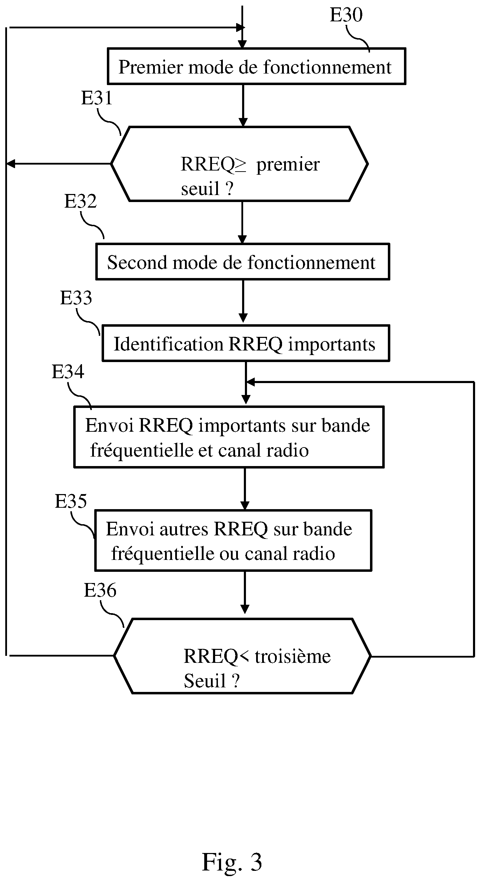

La **Fig. 3** illustre schématiquement un procédé de régulation destiné à résorber un engorgement du réseau de communication maillé utilisant au moins une bande fréquentielle et un canal radio selon la présente invention.

Le procédé est exécuté en permanence par chaque dispositif noeud, dit dispositif noeud intermédiaire, du réseau de communication maillé 120. Le dispositif noeud intermédiaire est un dispositif noeud du réseau de communication maillé 120 qui reçoit des requêtes de route pour lesquelles ledit dispositif noeud intermédiaire n'est ni le noeud source ni le noeud destination.

Dans une première étape E30, le dispositif noeud intermédiaire est dans un premier mode de fonctionnement dit mode nominal. Dans le mode nominal, le dispositif noeud intermédiaire relaie chaque requête de route reçue à son voisinage réseau sur une bande fréquentielle et sur le canal radio, ou directement au dispositif noeud destination si ledit dispositif noeud destination appartient au voisinage réseau du dispositif noeud intermédiaire.

Dans une étape E31, le dispositif noeud intermédiaire détermine s'il se trouve dans une situation d'engorgement. Pour cela, le dispositif noeud intermédiaire compare le nombre de requêtes de routes reçues sur une fenêtre temporelle de durée prédéfinie avec un premier premier seuil de saturation. Le premier seuil de saturation est par exemple égal à 10. La durée prédéfinie est par exemple une minute. Si le nombre de requêtes de route reçues sur la fenêtre temporelle de durée prédéfinie dépasse le premier seuil de saturation, le dispositif noeud intermédiaire détecte une situation d'engorgement et passe dans un second mode de fonctionnement dit mode dégradé à l'étape E32. Sinon, le dispositif noeud intermédiaire reste dans le mode nominal correspondant à l'étape E30 et continue de relayer par diffusion chaque requête de route reçue sur une bande fréquentielle et sur le canal radio.

A l'étape E33, le dispositif noeud intermédiaire identifie des requêtes de route comme importantes afin de favoriser la réparation des routes correspondantes. Une requête de route est considérée comme importante au niveau du dispositif noeud intermédiaire lorsque le nombre de ladite requête de route qui est reçue sur la fenêtre temporelle de durée prédéfinie, par exemple pendant une minute, ladite requête de route étant émise par le même noeud source et comportant le même numéro de séquence, est supérieur à un deuxième seuil prédéfini, appelé seuil minimal de transmission. Chaque requête de route émise par le même noeud source et comportant le même numéro de séquence est considérée comme appartenant à un même groupe de requêtes de route.

En variante, les requêtes de route d'un même groupe de requêtes de routes, ayant été reçues le plus grand nombre de fois dans la fenêtre temporelle de durée prédéfinie sont considérées comme importantes.

En variante, les différentes requêtes de route de N groupes de requêtes, avec N entier supérieur ou égal à deux et inférieur au nombre maximum de différents groupes de requêtes de routes reçus dans la fenêtre temporelle de durée prédéfinie sont considérées comme importantes.

En effet, plus le nombre de requêtes de route appartenant à un même groupe, reçues par un dispositif noeud intermédiaire est élevé, plus les probabilités que ledit dispositif noeud intermédiaire joue un rôle de relai important pour la route considérée sont élevées. Ainsi, le dispositif noeud intermédiaire peut favoriser, dans une situation d'engorgement, la réparation des routes pour lesquelles ledit dispositif noeud intermédiaire joue potentiellement un rôle de relai important.

Dans une étape E34, le noeud dispositif intermédiaire relaie sur une bande fréquentielle et sur le canal radio, à son voisinage réseau, les requêtes de route identifiées comme importantes à l'étape E33.

Dans une étape E35, le noeud dispositif intermédiaire relaie sur une bande fréquentielle ou sur le canal radio, à son voisinage réseau, les requêtes de route non identifiées comme importantes à l'étape E33.

Lorsque les requêtes de découverte sont relayées dans le mode dégradé, le dispositif noeud intermédiaire insère dans chaque requête de route une information prédéterminée qui indique que le dispositif noeud intermédiaire fonctionne dans le mode dégradé. Cette information prédéterminée est utilisée par les dispositifs noeuds, lorsqu'ils mémoriseront la route correspondant à la requête de découverte, pour insérer dans la table de routage une durée de vie restreinte dans le temps de la route.

La réponse de découverte de route, lorsqu'elle est transmise de proche en proche en suivant le chemin inverse de la requête de découverte de route qui était associée au meilleur coût de route comporte aussi l'information prédéterminée qui indique que le dispositif noeud intermédiaire fonctionne dans le mode dégradé.

Par exemple, une durée de vie restreinte est comprise entre 10 et 30mn alors qu'une durée de vie dans le mode nominal est supérieure à 2 heures.

Le choix entre la bande fréquentielle ou le canal radio est par exemple effectué en déterminant le taux d'occupation de la bande fréquentielle G3-PLC à partir d'un mécanisme utilisé dans la méthode d'écoute d'un Support à Accès Multiple CSMA/CA (en anglais Carrier Sense Multiple Access with Collision Avoidance). Le mécanisme permet de vérifier à tout moment si la bande fréquentielle est occupée ou non. Le taux d'occupation est calculé en mesurant pendant une seconde fenêtre temporelle le temps d'occupation de la bande de fréquence.

Le taux d'occupation du canal radio est par exemple déterminé en mesurant pendant la fenêtre temporelle le temps d'occupation du canal radio.

Le canal radio ou la bande fréquentielle choisi est celui ayant le plus faible taux d'occupation.

Dans une étape E36, le noeud dispositif intermédiaire détermine s'il se trouve dans une situation de désengorgement. Pour cela, le dispositif noeud intermédiaire compare le nombre de requêtes de routes reçues sur la fenêtre temporelle de durée prédéfinie avec un troisième seuil de saturation. Le troisième seuil de saturation est par exemple égal à 5. La durée prédéfinie est par exemple une minute. Si le nombre de requêtes de route reçues sur la fenêtre temporelle de durée prédéfinie est inférieur au troisième seuil de saturation, le dispositif noeud intermédiaire détecte une situation de désengorgement et retourne à l'étape E30.

Dans la négative, le dispositif noeud intermédiaire retourne à l'étape E34.

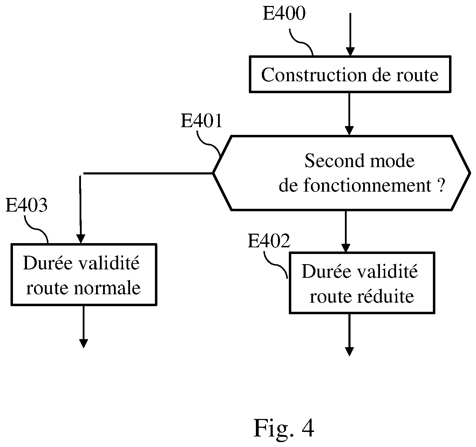

La Fig. **4** illustre schématiquement un procédé d'enrichissement d'une table de routage utilisée dans un réseau de communication maillé utilisant au moins une bande fréquentielle et un canal radio selon la présente invention.

Le procédé est exécuté en permanence par chaque dispositif noeud lors de la mémorisation d'une route dans sa table de routage lors de la réception d'une réponse de découverte de route.

Dans l'étape E400, le dispositif noeud insère une route dans sa table de routage.

Dans l'étape E401, le dispositif noeud vérifie si la réponse de découverte de route reçue comporte l'information prédéterminée.

Dans l'affirmative, le dispositif noeud passe à l'étape E402 et insère pour la route une information indiquant que la route a une durée de validité réduite. Par exemple la durée de validité est comprise entre 10 et 30mn. La durée de validité est par exemple choisie de manière aléatoire entre 10 et 30mn. La durée de validité de la route est inférieure à la durée de validité de la route lorsque l'information prédéterminée n'est pas présente dans la réponse de découverte reçue.

Dans la négative, le dispositif noeud passe à l'étape E403 et n'insère pas pour la route une information indiquant que la route a une durée de validité réduite.

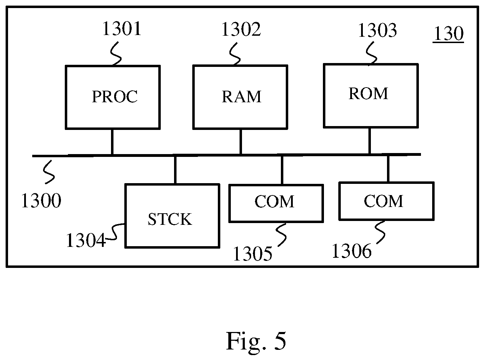

La **Fig. 5** illustre schématiquement un exemple d'architecture matérielle d'un dispositif noeud du réseau de communication selon un mode de réalisation.

Un tel dispositif noeud est qualifié de multi-bandes car capable de transmettre un message sur plusieurs bandes fréquentielles. On note que la Fig. 5 pourrait aussi illustrer schématiquement un exemple d'architecture matérielle d'un module de traitement compris dans le dispositif noeud.

Selon l'exemple d'architecture matérielle représenté à la Fig. 5, le dispositif noeud 130 comprend alors, reliés par un bus de communication 1300 : un processeur ou CPU (« Central Processing Unit » en anglais) 1301 ; une mémoire vive RAM (« Random Access Memory » en anglais) 1302 ; une mémoire morte ROM (« Read Only Memory » en anglais) 1303 ; une unité de stockage telle qu'un disque dur (ou un lecteur de support de stockage, tel qu'un lecteur de cartes SD (« Secure Digital » en anglais) 1304 ; au moins une interface de communication 1305 permettant au dispositif noeud 130 de communiquer avec les dispositifs noeuds appartenant à son voisinage, e.g. les noeuds 131 et 133.

Le processeur 1301 est capable d'exécuter des instructions chargées dans la RAM 1302 à partir de la ROM 1303, d'une mémoire externe (non représentée), d'un support de stockage (tel qu'une carte SD), ou d'un réseau de communication. Lorsque le dispositif noeud est mis sous tension, le processeur 1301 est capable de lire de la RAM 1302 des instructions et de les exécuter. Ces instructions forment un programme d'ordinateur causant la mise en oeuvre, par le processeur 1301, de tout ou partie des procédés décrits en relation avec les Figs. 3 et 4.

Les procédés décrits ci-après en relation avec les Figs. 3 et 4 peuvent être implémentés sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif noeud 130 comprend de la circuiterie électronique configurée pour mettre en oeuvre les procédés décrits en relation avec les Figs. 3 et 4.

## Revendications

1. Procédé de régulation destiné à résorber un engorgement d'un réseau de communication maillé (120), le réseau de communication maillé (120) comportant une pluralité de dispositifs noeuds utilisant des communications par courants porteurs en ligne, une requête de route étant émise par un dispositif noeud source et des copies de la requête de route étant relayées par diffusion de proche en proche par des dispositifs noeuds intermédiaires vers un dispositif noeud destination, un dispositif noeud intermédiaire pouvant recevoir une ou plusieurs copies d'au moins une requête de route, **caractérisé en ce que** le dispositif noeud intermédiaire est apte à émettre des messages sur au moins une bande fréquentielle du réseau d'alimentation électrique utilisant des communications par courants porteurs en ligne et sur un canal radio et **en ce que** le procédé est exécuté par le dispositif noeud intermédiaire et comporte les étapes de :
- détection (E31) d'une situation d'engorgement lorsqu'un nombre de copies de requêtes de route reçues sur une fenêtre temporelle de durée prédéfinie est supérieur à un premier seuil prédéfini,
- identification (E33) , lorsqu'une situation d'engorgement est détectée, des requêtes de route comme importantes, une requête de route étant identifiée comme importante lorsque le nombre de copies de ladite requête de route reçues sur la fenêtre temporelle de durée prédéfinie est supérieur à un deuxième seuil prédéfini ou supérieur au nombre de copies d'autres requêtes de route,
- relai (E34) uniquement des copies des requêtes de route identifiées comme importantes sur une bande fréquentielle et sur le canal radio,
- relai (E35) des copies des requêtes de route identifiées comme non importantes sur une bande fréquentielle ou sur le canal radio.

2. Procédé selon la revendication 1, **caractérisé en ce qu'**il comporte en outre l'étape de relai des copies des requêtes de route identifiées comme non importantes sur une bande fréquentielle et sur le canal radio lorsqu'un nombre de copies de requêtes de route reçues sur une fenêtre temporelle de durée prédéfinie est inférieur à un troisième seuil prédéfini.

3. Procédé selon l'une des revendications 1 et 2, **caractérisé en ce que** le relai des copies des requêtes de route identifiées comme importantes est effectué en relayant en priorité les requêtes de routes dont le nombre de copies reçues par le dispositif noeud intermédiaire est le plus élevé.

4. Procédé selon l'une quelconque des revendications 1 à 3, **caractérisé en ce que** les copies des requêtes de route relayées lorsque le nombre de copies de requêtes de route reçues sur la fenêtre temporelle de durée prédéfinie est supérieur au premier seuil prédéfini comportent une information prédéterminée qui indique que le nombre de copies de requêtes de route reçues sur une fenêtre temporelle de durée prédéfinie est supérieur au premier seuil prédéfini.

5. Procédé selon la revendication 4, **caractérisé en ce que** chaque dispositif noeud recevant une réponse de découverte de route à une requête relayée comportant l'information prédéterminée insère avec la route correspondante mémorisée dans sa table de routage, une durée de validité de la route inférieure à la durée de validité de la route lorsque l'information prédéterminée n'est pas présente dans la réponse de découverte reçue.

6. Dispositif de régulation destiné à résorber un engorgement d'un réseau de communication maillé (120), le réseau de communication maillé (120) comportant une pluralité de dispositifs noeuds utilisant des communications par courants porteurs en ligne, une requête de route étant émise par un dispositif noeud source et des copies de la requête de route étant relayées par diffusion de proche en proche par des dispositifs noeuds intermédiaires vers un dispositif noeud destination, un dispositif noeud intermédiaire pouvant recevoir une ou plusieurs copies d'au moins une requête de route, **caractérisé en ce que** le dispositif noeud intermédiaire est apte à émettre des messages sur au moins une bande fréquentielle du réseau d'alimentation électrique utilisant des communications par courants porteurs en ligne et sur un canal radio et en ce le dispositif de régulation est compris dans le dispositif noeud intermédiaire et comporte :
- des moyens de détection d'une situation d'engorgement lorsqu'un nombre de copies de requêtes de route reçues sur une fenêtre temporelle de durée prédéfinie est supérieur à un premier seuil prédéfini,
- des moyens d'identification, lorsqu'une situation d'engorgement est détectée, des requêtes de route comme importantes, une requête de route étant identifiée comme importante lorsque le nombre de copies de ladite requête de route reçues sur la fenêtre temporelle de durée prédéfinie est supérieur à un deuxième seuil prédéfini ou supérieur au nombre de copies d'autres requêtes de route,
- des moyens de relai uniquement des copies des requêtes de route identifiées comme importantes sur une bande fréquentielle et sur le canal radio,
- des moyens de relai des copies des requêtes de route identifiées comme non importantes sur une bande fréquentielle ou sur le canal radio.

7. Un produit programme d'ordinateur **caractérisé en ce qu'**il comprend des instructions pour implémenter, par un dispositif noeud, le procédé selon l'une quelconque des revendications 1 à 5, lorsque ledit programme est exécuté par un processeur du dispositif noeud.

8. Un support de stockage **caractérisé en ce qu'**il stocke un programme d'ordinateur comprenant des instructions pour implémenter, par un dispositif noeud, le procédé selon l'une quelconque des revendications 1 à 5, lorsque ledit programme est exécuté par un processeur du dispositif noeud.

## Patentansprüche

1. Regulierungsverfahren, dazu bestimmt, eine Überlastung eines vermaschten Kommunikationsnetzwerks (120) zu beheben, wobei das vermaschte Kommunikationsnetzwerk (120) eine Vielzahl von Knotenvorrichtungen aufweist, die Powerline-Kommunikationen verwenden, wobei eine Routenanforderung von einer Quellenknotenvorrichtung gesendet wird und Kopien der Routenanforderung durch sukzessive Verbreitung durch Zwischenknotenvorrichtungen an eine Zielknotenvorrichtung weitergeleitet werden, wobei eine Zwischenknotenvorrichtung eine oder mehrere Kopien mindestens einer Routenanforderung empfangen kann, **dadurch gekennzeichnet, dass** die Zwischenknotenvorrichtung fähig ist, Nachrichten auf mindestens einem Frequenzband des Stromversorgungsnetzes unter Verwendung von Powerline-Kommunikationen und auf einem Funkkanal zu senden, und dass das Verfahren von der Zwischenknotenvorrichtung ausgeführt wird und die folgenden Schritte aufweist:
- Erkennung (E31) einer Überlastungssituation, wenn eine Anzahl von in einem Zeitfenster vordefinierter Dauer empfangenen Kopien von Routenanforderungen höher ist als eine erste vordefinierte Schwelle,
- Identifizierung (E33), wenn eine Überlastungssituation erkannt wird, der Routenanforderungen als wichtig, wobei eine Routenanforderung als wichtig identifiziert wird, wenn die Anzahl von im Zeitfenster vordefinierter Dauer empfangenen Kopien der Routenanforderung höher ist als eine zweite vordefinierte Schwelle oder höher als die Anzahl von Kopien anderer Routenanforderungen,
- Weiterleitung (E34) nur der Kopien der als wichtig identifizierten Routenanforderungen auf einem Frequenzband und auf dem Funkkanal,
- Weiterleitung (E35) der Kopien der als nicht wichtig identifizierten Routenanforderungen auf einem Frequenzband oder auf dem Funkkanal.

2. Verfahren nach Anspruch 1, **dadurch gekennzeichnet, dass** es außerdem den Schritt der Weiterleitung der Kopien der als nicht wichtig identifizierten Routenanforderungen auf einem Frequenzband und auf dem Funkkanal aufweist, wenn eine in einem Zeitfenster vordefinierter Dauer empfangene Anzahl von Kopien von Routenanforderungen niedriger ist als eine dritte vordefinierte Schwelle.

3. Verfahren nach einem der Ansprüche 1 und 2, **dadurch gekennzeichnet, dass** die Weiterleitung der Kopien der als wichtig identifizierten Routenanforderungen ausgeführt wird, indem prioritär die Routenanforderungen weitergeleitet werden, deren Anzahl von durch die Zwischenknotenvorrichtung empfangenen Kopien die höchste ist.

4. Verfahren nach einem der Ansprüche 1 bis 3, **dadurch gekennzeichnet, dass** die Kopien der weitergeleiteten Routenanforderungen, wenn die Anzahl von im Zeitfenster vordefinierter Dauer empfangenen Kopien von Routenanforderungen höher ist als die erste vordefinierte Schwelle, eine vorbestimmte Information aufweisen, die anzeigt, dass die Anzahl von in einem Zeitfenster vordefinierter Dauer empfangenen Kopien von Routenanforderungen höher ist als die erste vordefinierte Schwelle.

5. Verfahren nach Anspruch 4, **dadurch gekennzeichnet, dass** jede Knotenvorrichtung, die eine Routenentdeckungsantwort auf eine weitergeleitete Anforderung empfängt, die die vorbestimmte Information aufweist, mit der in ihrer Routingtabelle gespeicherten entsprechenden Route eine Gültigkeitsdauer der Route geringer als die Gültigkeitsdauer der Route einfügt, wenn die vorbestimmte Information nicht in der empfangenen Entdeckungsantwort vorhanden ist.

6. Regulierungsvorrichtung, dazu bestimmt, eine Überlastung eines vermaschten Kommunikationsnetzwerks (120) zu beheben, wobei das vermaschte Kommunikationsnetzwerk (120) eine Vielzahl von Knotenvorrichtungen aufweist, die Powerline-Kommunikationen verwenden, wobei eine Routenanforderung von einer Quellenknotenvorrichtung gesendet wird und Kopien der Routenanforderung durch sukzessive Verbreitung durch Zwischenknotenvorrichtungen an eine Zielknotenvorrichtung weitergeleitet werden, wobei eine Zwischenknotenvorrichtung eine oder mehrere Kopien mindestens einer Routenanforderung empfangen kann, **dadurch gekennzeichnet, dass** die Zwischenknotenvorrichtung fähig ist, Nachrichten auf mindestens einem Frequenzband des Stromversorgungsnetzes unter Verwendung von Powerline-Kommunikationen und auf einem Funkkanal zu senden, und dass die Regulierungsvorrichtung in der Zwischenknotenvorrichtung enthalten ist und aufweist:
- Einrichtungen zur Erkennung einer Überlastungssituation, wenn eine Anzahl von in einem Zeitfenster vordefinierter Dauer empfangenen Kopien von Routenanforderungen höher ist als eine erste vordefinierte Schwelle,
- Einrichtungen zur Identifizierung, wenn eine Überlastungssituation erkannt wird, von Routenanforderungen als wichtig, wobei eine Routenanforderung als wichtig identifiziert wird, wenn die Anzahl von im Zeitfenster vordefinierter Dauer empfangenen Kopien der Routenanforderung höher ist als eine zweite vordefinierte Schwelle oder höher als die Anzahl von Kopien anderer Routenanforderungen,
- Einrichtungen zur Weiterleitung nur der Kopien der als wichtig identifizierten Routenanforderungen auf einem Frequenzband und auf dem Funkkanal,
- Einrichtungen zur Weiterleitung der Kopien der als nicht wichtig identifizierten Routenanforderungen auf einem Frequenzband oder auf dem Funkkanal.

7. Computerprogrammprodukt, **dadurch gekennzeichnet, dass** es Anweisungen enthält, um das Verfahren nach einem der Ansprüche 1 bis 5 durch eine Knotenvorrichtung zu implementieren, wenn das Programm von einem Prozessor der Knotenvorrichtung ausgeführt wird.

8. Speicherträger, **dadurch gekennzeichnet, dass** er ein Computerprogramm speichert, das Anweisungen enthält, um das Verfahren nach einem der Ansprüche 1 bis 5 durch eine Knotenvorrichtung zu implementieren, wenn das Programm von einem Prozessor der Knotenvorrichtung ausgeführt wird.

## Claims

1. Regulation method intended to resorb congestion on a mesh communication network (120), the mesh communication network (120) comprising a plurality of node devices using powerline communications, a route request being sent by a source node device and copies of the route request being relayed by gradual broadcasting by intermediate node devices to a destination node device, an intermediate node device being able to receive one or more copies of at least one route request, **characterised in that** the intermediate node device is able to send messages on at least one frequency band of the electrical supply network using powerline communications and over a radio channel, and **in that** the method is executed by the intermediate node device and comprises the steps of:
- detecting (E31) a congestion situation when a number of route request copies received on a time window of predefined duration is higher than a first ''''''''''''''' predefined threshold,
- identifying (E33), when a congestion situation is detected, route requests as important, a route request being identified as important when the number of copies of said route request received on the time window of predefined duration is above a second predefined threshold or greater than the number of copies of other route requests,
- relaying (E34) only copies of the route requests identified as important on a frequency band and over the radio channel,
- relaying (E35) copies of the route requests identified as not important on a frequency band or over the radio channel.

2. Method according to claim 1, **characterised in that** it further comprises the step of relaying copies of the route requests identified as not important on a frequency band and over the radio channel when a number of route request copies received on a time window of predefined duration is below a third predefined threshold.

3. Method according to one of claims 1 and 2, **characterised in that** the copies of the route requests identified as important are relayed by relaying as a priority the route requests the number of copies of which received by the intermediate node device is the highest.

4. Method according to any one of claims 1 to 3, **characterised in that** the copies of the route requests relayed when the number of route request copies received on the time window of predefined duration is above the first predefined threshold comprise predefined information that indicates that the number of route request copies received on a time window of predefined duration is above the first predefined threshold.

5. Method according to claim 4, **characterised in that** each node device receiving a route discovery response to a relayed request comprising the predetermined information inserts, with the corresponding route stored in its routing table, a duration of validity of the route less than the duration of validity of the route when the predetermined information is not present in the discovery response received.

6. Regulation device intended to resorb congestion in a mesh communication network (120), the mesh communication network (120) comprising a plurality of node devices using powerline communications, a route request being sent by a source node device and copies of the route request being relayed by gradual broadcasting by intermediate node devices to a destination node device, an intermediate node device being able to receive one or more copies of at least one route request, **characterised in that** the intermediate node device is able to send messages on at least one frequency band of the electrical supply network using powerline communications and over a radio channel, and **in that** the regulation device is included in the intermediate node device and comprises:
- means for detecting a congestion situation when a number of route request copies received on a time window of predefined duration is higher than a first predefined threshold,
- means for identifying, when a congestion situation is detected, route requests as important, a route request being identified as important when the number of copies of said route request received on the time window of predefined duration is above a second predefined threshold or greater than the number of copies of other route requests,
- means for relaying only copies of the route requests identified as important on a frequency band and over the radio channel,
- means for relaying copies of the route requests identified as not important on a frequency band or over the radio channel.

7. A computer program product, **characterised in that** it comprises instructions for implementing, by a node device, the method according to any one of claims 1 to 5, when said program is executed by a processor of the node device.

8. A storage medium, **characterised in that** it stores a computer program comprising instructions for implementing, by a node device, the method according to any one of claims 1 to 5, when said program is executed by a processor of the node device.
